# EUROPEAN PATENT SPECIFICATION

(11) **EP 2 829 714 B1**
(45) Date of publication and mention of the grant of the patent: **21.11.2018**
(21) Application number: 13382298.1
(22) Date of filing: 23.07.2013
(51) Int. Cl.: F02M 25/06, F01M 13/00

(54) **Automatic extraction of ethanol from an oil pan of an ethanol combustion engine**
Automatische Extraktion von Ethanol aus einer Ölwanne eines Ethanolverbrennungsmotor
Extraction automatique d'éthanol à partir d'un carter d'huile d'un moteur à combustion d'éthanol

(43) Date of publication of application: 28.01.2015
(73) Proprietor: Grupo Guascor, S.L. Unipersonal, 01510 Vitoria-Gasteiz, Álava (ES)
(72) Inventor: Fernandez de Landa Magarin, Juan José, 01510 Miano (ES)
(74) Representative: Patentanwaltskanzlei WILHELM & BECK

(56) References cited:
- US-A- 5 992 397
- US-A1- 2010 089 369

## Description

The present invention relates to a fuel ventilation system for an internal combustion engine and a method for operating a fuel ventilation system of an internal combustion engine.

### Background

Conventional internal combustion engines often provide mechanical energy to operate various devices and apparatuses, such as turbines and compressors, in a myriad of applications and industrial processes. The mechanical energy from the internal combustion engines is provided by the injection and subsequent combustion of a fuel (*e.g.,* ethanol) in a combustion chamber thereof. During the injection and combustion, a portion of the fuel (*e.g.,* blow-by fuel) in the combustion chamber may vaporize and escape through liners of the combustion chamber and drain into a crankcase of the internal combustion engine. To capture the stray fuel vapors, conventional internal combustion engines often employ a closed ventilation system (*e.g.,* blow-by circuit or a positive crankcase ventilation system). The closed ventilation system may prevent the venting of the fuel vapors by capturing and directing the fuel vapors through a flow path from the crankcase to an inlet (*e.g.,* intake manifold) of the internal combustion engine. In some cases, however, the fuel vapors in the flow path of the closed ventilation system may condense into a liquid and collect in an oil pan of the internal combustion engine where it may combine with and subsequently degrade lubricating oil contained therein, thereby reducing the effective lifetime of the lubricating oil.

In view of the foregoing, conventional internal combustion engines often utilize fuel-in-oil treating devices to separate the fuel from the lubrication oil. For example, the internal combustion engine may often utilize an oil heater to heat the lubricating oil in the oil pan to vaporize and separate the fuel contained therein. The separated fuel may then be directed to a collection vessel, where it may be collected to prevent the venting thereof to the atmosphere. While the heating and separation of the fuel from the lubricating oil may extend the effective lifetime of the lubricating oil, the increased heating may also result in an increased accumulation of the combustible fuel near the internal combustion engine. The increased accumulation of the combustible fuel near the internal combustion engine may present an unnecessary risk to operators during routine maintenance thereof.

Document US 2010/089369 discloses an engine assembly including a vapor canister in selective fluid communication with a crankcase to store alcohol vapor when the temperature inside the crankcase causes alcohol accumulated in the crankcase to boil. The vapor canister is in selective fluid communication with an air induction system to recirculate the alcohol vapor through the engine in a metered fashion.

The above mentioned document US2010/089369A discloses a fuel ventilation system and a method for operating a fuel ventilation system according to the preamble of claim 1 and claim 7 respectively.

What is needed, then, is an improved fuel separation and extraction system and method of operating thereof, capable of automatically separating and extracting fuel from lubricating oil in an internal combustion engine and returning or cycling the separated fuel back to the internal combustion engine.

### Summary

Present invention provides a fuel ventilation system for an internal combustion engine as defined by the features of claim 1. The fuel ventilation system includes a vent fluidly coupled with the internal combustion engine. The vent is configured to receive a blow-by fuel from the internal combustion engine and separate fuel vapor from the blow-by fuel. The fuel ventilation system includes a fuel collector fluidly coupled with the vent and configured to receive the fuel vapor therefrom and condense the fuel vapor to a liquid fuel. The fuel ventilation system includes an accumulator fluidly coupled with the fuel collector and configured to receive the liquid fuel therefrom. The accumulator includes a hollow body having a first end and a second end. A piston is slidably disposed in the hollow body of the accumulator between the first end and the second end. The piston and the first end of the accumulator at least partially define a first chamber therebetween. Additionally, the piston and the second end of the accumulator at least partially define a second chamber therebetween. The accumulator includes a biasing member interposed between the piston and the first end. The biasing member is configured to apply a biasing force to the piston to actuate the piston toward the second end of the accumulator. The fuel ventilation system includes a pump fluidly coupled with the second chamber of the accumulator and configured to direct a process fluid thereto. The pump delivers

the process fluid to the second chamber of the accumulator to pressurize the second chamber and apply a force to the piston of the accumulator to actuate the piston toward the first end of the accumulator. Present invention further provides a method for operating a fuel ventilation system of an internal combustion engine as defined by the features of claim 7. The method includes feeding a blow-by fuel from the internal combustion engine to a vent fluidly coupled therewith. The method includes separating fuel vapor from the blow-by fuel in the vent and condensing the fuel vapor to a liquid fuel in a fuel collector fluidly coupled with the vent.

The method includes directing the liquid fuel from the fuel collector to an accumulator and discharging the liquid fuel from the accumulator to the internal combustion engine. The method may further include actuating a fuel inlet valve to direct the liquid fuel from the fuel collector to a first chamber of an accumulator. The accumulator may include a hollow body having a first end and a second end. The accumulator may also include a piston slidably disposed in the hollow body between the first end and the second end. A first surface of the piston and the first end of the hollow body may at least partially define the first chamber therebetween, and a second surface of the piston and the second end of the accumulator may at least partially define a second chamber therebetween. The accumulator may further include a biasing member disposed in the first chamber. The biasing member may include a compressible gas configured to apply a biasing force to the first surface of the piston to thereby actuate the piston toward the second end of the hollow body. The method may also include actuating a fluid inlet valve to direct fuel from a fuel pump of the internal combustion engine to the second chamber of the accumulator to pressurize the second chamber. The method may also include discharging the liquid fuel from the first chamber of the accumulator to the internal combustion engine.

### Brief Description of the Drawings

The present disclosure is best understood from the following detailed description when read with the accompanying Figures. It is emphasized that, in accordance with the standard practice in the industry, various features are not drawn to scale. In fact, the dimensions of the various features may be arbitrarily increased or reduced for clarity of discussion.
Figure 1 illustrates an isometric view of an exemplary fuel ventilation system for an internal combustion engine, the fuel ventilation system having an exemplary accumulator, according to one or more embodiments disclosed.
Figures 2A illustrates a cross-sectional view of the accumulator of the fuel ventilation system of

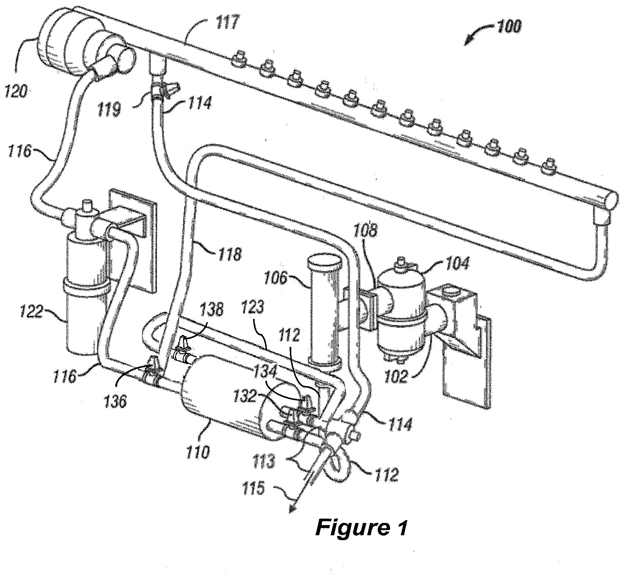

Figure 1, according to one or more embodiments disclosed.

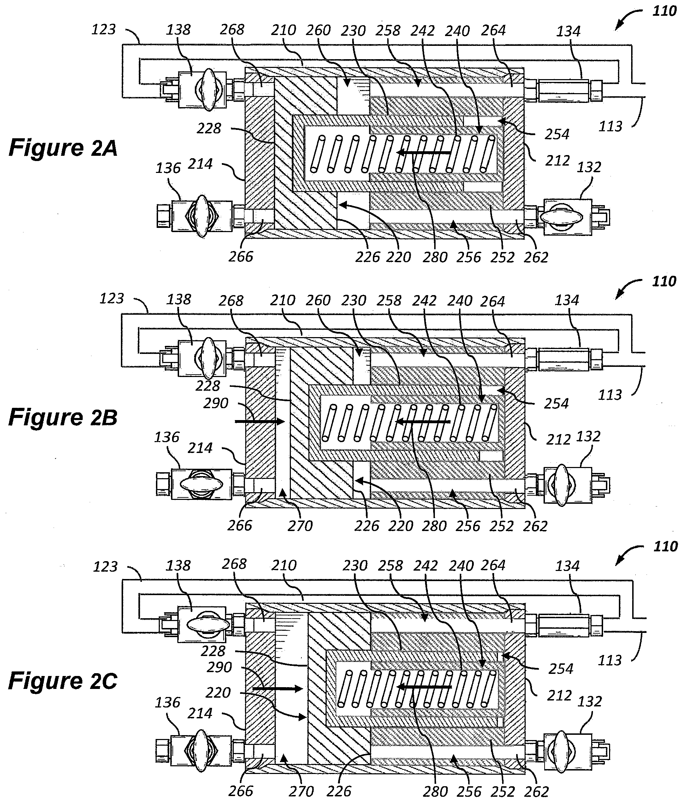

Figures 2B illustrates a cross-sectional view of the accumulator of the fuel ventilation system of
Figure 1, according to one or more embodiments disclosed.
Figures 2C illustrates a cross-sectional view of the accumulator of the fuel ventilation system of
Figure 1, according to one or more embodiments disclosed.

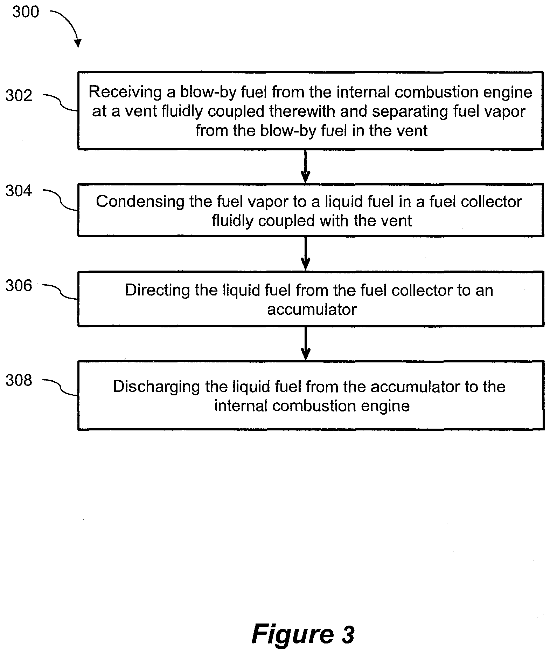

Figure 3 is a flowchart of a method for operating a fuel ventilation system of an internal combustion engine, according to one or more embodiments disclosed.

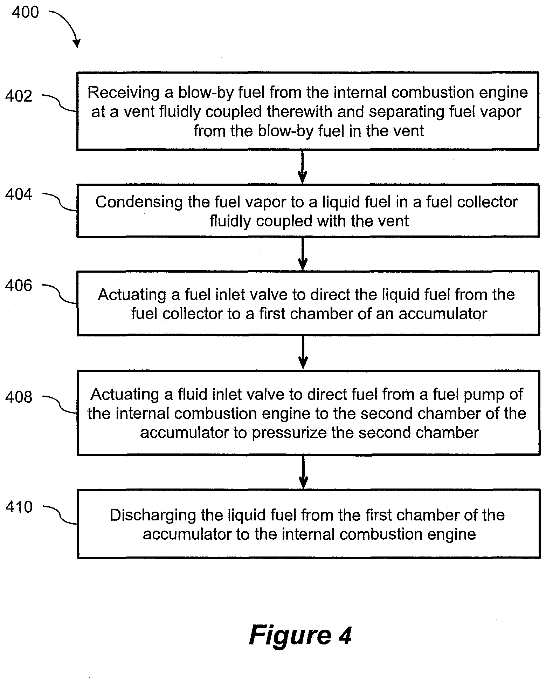

Figure 4 is a flowchart of another method for operating a fuel ventilation system of an internal combustion engine, according to one or more embodiments disclosed.

### Detailed Description

It is to be understood that the following disclosure describes several exemplary embodiments for implementing different features, structures, or functions of the invention. Exemplary embodiments of components, arrangements, and configurations are described below to simplify the present disclosure; however, these exemplary embodiments are provided merely as examples and are not intended to limit the scope of the invention.

Figure 1 illustrates an isometric view of an exemplary fuel ventilation system 100 for an internal combustion engine, according to one or more embodiments. During injection and combustion of fuel in the internal combustion engine, a portion of the fuel (*e.g.,* blow-by fuel) in a combustion chamber thereof may vaporize and escape through liners of the combustion chamber and drain into a crankcase (not shown) of the internal combustion engine. In at least one embodiment, the blow-by fuel may include intake air, fuel vapors, exhaust gas, atomized oil, water vapor, or any combination thereof. The fuel ventilation system 100 may be configured to receive the blow-by fuel from the internal combustion engine (not shown), separate the fuel vapors from the blow-by fuel, and direct the separated fuel to an inlet of the internal combustion engine. The fuel ventilation system 100 may be fluidly coupled with the internal combustion engine via a pipe section, commonly referred to as a conduit or line 102, and configured to receive the blow-by fuel therefrom. For example, line 102 of the fuel ventilation system 100 may be fluidly coupled with the crankcase (not shown) of the internal combustion engine and configured to receive the blow-by fuel therefrom. In at least one embodiment, the blow-by fuel from the internal combustion engine may include fuel vapors and/or atomized, or misted, oil. For example, due to vibrations of the internal combustion engine during operation thereof, oil in the crankcase may be atomized and combined with the blow-by fuel. The atomized oil entrained with the blow-by fuel may be drawn out of the crankcase along with the blow-by fuel and introduced to the fuel ventilation system 100 via line 102.

The fuel ventilation system 100 may include a vent 104 fluidly coupled with the internal combustion engine via line 102. The vent 104 may be configured to receive the blow-by fuel from the internal combustion engine via line 102, separate at least a portion of the atomized oil from the fuel vapors of the blow-by fuel, and direct the fuel vapors to a fuel collector 106 via a pipe section or line 108. At least a portion of the fuel vapors directed to the fuel collector 106 may cool and condense therein to provide a liquid fuel. In at least one embodiment, the liquid fuel may be stored in the fuel collector 106 and subsequently removed manually by an operator. In another embodiment, the liquid fuel may be stored in the fuel collector 106 and subsequently directed to an accumulator 110 fluidly coupled therewith via line 112. A fuel inlet valve 132 may be fluidly coupled with line 112 between the fuel collector 106 and the accumulator 110 and configured to control or regulate the flow of the liquid fuel flowing therethrough. The accumulator 110 may receive the liquid fuel in a first chamber 260 (see Figure 2) thereof and subsequently direct the liquid fuel from the first chamber to the internal combustion engine fluidly coupled therewith via line 113. For example, the first chamber of the accumulator 110 may be fluidly coupled with a fuel tank (not shown) of the internal combustion engine via line 113, and the accumulator 110 may direct the liquid fuel from the first chamber thereof to the fuel tank of the internal combustion engine via line 113. In at least one embodiment, a fuel outlet valve 134 may be fluidly coupled with line 113 between the accumulator 110 and the internal combustion engine and configured to control or regulate the flow of the liquid fuel flowing therethrough.

In at least one embodiment, a flow of the liquid fuel through line 113, as indicated by arrow 115, may be driven by a pressure differential generated from the internal combustion engine. For example, the flow 115 of the liquid fuel through line 113 may be driven by the pressure differential between line 113 and a fuel rail 117 of the internal combustion engine fluidly coupled therewith via line 114. A regulator valve 119 may be fluidly coupled with line 114 between the fuel rail 117 and line 113. The regulator valve 119 may be configured to control or regulate the flow of the liquid fuel from the fuel rail 117 to line 113 via line 114 to thereby control the pressure differential between the fuel rail 117 and line 113. In at least one embodiment, the regulator valve 119 may be actuated such that a pressure of the liquid fuel contained in the fuel rail 117 may be greater than a pressure of the liquid fuel contained in line 113. For example, the regulator valve 119 may be actuated such that the liquid fuel contained in the fuel rail 117 may have a pressure from a low of about 3.5 bar, about 4.0 bar, about 4.5 bar, or about 4.8 bar to a high of about 5 bar, about 5.2 bar, about 5.5 bar, about 6.0 bar, about 6.5 bar, or greater. The regulator valve 119 may also be actuated such that the liquid fuel contained in line 113 may have a pressure from a low of about 0.1 bar, about 0.2 bar, about 0.3 bar, about 0.4 bar, or about 0.45 bar to a high of about 0.5 bar, about 0.55 bar, about 0.6 bar, about 0.7 bar, about 0.8 bar, about 0.9 bar, about 1 bar, or greater.

In at least one embodiment, the fuel ventilation system 100 may include a pump 120 fluidly coupled with the accumulator 110 via line 116 and configured to deliver a pressurized process fluid thereto. For example, the pump 120 may deliver the pressurized process fluid to a second chamber 270 (see Figure 2) of the accumulator 110 to drive or operate one or more processes thereof, as further described herein. A fluid inlet valve 136 may be fluidly coupled with line 116 between the pump 120 and the accumulator 110 and configured to regulate the flow of the process fluid flowing therethrough. In at least one embodiment, the fluid inlet valve 136 may also be fluidly coupled with the fuel rail 117 of the internal combustion engine via line 118. For example, the fluid inlet valve 136 may be a three-way valve and may be configured to selectively regulate the flow of the process fluid from the pump 120 to the accumulator 110 and/or the fuel rail 117 of the internal combustion engine.

In at least one embodiment, the process fluid from the second chamber of the accumulator 110 may be directed to the fuel tank of the internal combustion engine via line 113. For example, the second chamber of the accumulator 110 may be fluidly coupled with line 113 via line 123 and the process fluid from the second chamber of the accumulator 110 may be directed to the fuel tank of the internal combustion engine via line 123 and line 113. Accordingly, in at least one embodiment, the process fluid from the second chamber of the accumulator 110 may combine with the liquid fuel from the first chamber in line 113. A fluid outlet valve 138 may be fluidly coupled with line 123 between the second chamber of the accumulator 110 and line 113 and configured to regulate the flow of the process fluid flowing therethrough.

In at least one embodiment, a filter 122 may be fluidly coupled with line 116 downstream from the pump 120 and upstream of the accumulator 110. The filter 122 may be configured to remove one or more contaminants from the pressurized fluid flowing from the pump 120 to the accumulator 110. In at least one embodiment, the pump 120 may be a fuel pump of the internal combustion engine and the pressurized process fluid may be fuel (*e.g.,* ethanol) from the internal combustion engine. Accordingly, the pump 120 may deliver the pressurized fuel from the internal combustion engine to the second chamber of the accumulator 110 to drive one or more processes thereof. The fuel in the second chamber of the accumulator 110 may then be directed back to the internal combustion engine (*e.g.,* the fuel tank) via line 123 and line 113. In another embodiment, the pump 120 may be a separate pump (not shown), such as an electric pump, configured to deliver the pressurized process fluid to the accumulator 110.

Figures 2A, 2B, and 2C illustrate cross-sectional views of the accumulator 110 of the fuel ventilation system 100 of Figure 1, according to one or more embodiments. The accumulator 110 may include a generally hollow, cylindrical body or housing 210 having end caps 212, 214 coupled with respective end portions thereof. A seal (not shown) may be disposed between the cylindrical body 210 and the end caps 212, 214 to provide a fluid tight seal therebetween. As illustrated in Figure 2B, a piston 220 may be slidably disposed and contained within the cylindrical body 210 of the accumulator 110 to at least partially define the first chamber 260 and the second chamber 270. For example, a first face or surface 226 of the piston 220 and the first end cap 212 may at least partially define the first chamber 260. Further, a second face or surface 228 of the piston 220 and the second end cap 214 may at least partially define the second chamber 270. In at least one embodiment, the piston 220 may form or provide a fluid tight seal between the first chamber 260 and the second chamber 270. For example, the piston 220 may include one or more circumferential channels or grooves (not shown) having a seal (e.g., O-ring) disposed therein. In addition to, or in substitution of the seal, the channels or grooves may include a guiding ring configured to maintain the orientation of the piston 220 within the cylindrical body 210.

Figure 2A illustrates the piston 220 in a seated position where the second surface 228 of the piston 220 may be located or positioned proximal the second end cap 214. The piston 220 may be held in the seated position proximal the second end cap 214 by at least one biasing member 240. In at least one embodiment, as illustrated in Figures 2A, 2B, and 2C, the biasing member 240 may be at least partially disposed within a piston rod 230 of the piston 220. In another embodiment, the piston 220 may be a free-floating piston and the biasing member 240 may be disposed within the first chamber 260 between the first end cap 212 and the free-floating piston. The biasing member 240 may engage the first end cap 212 and the piston 220 to apply or exert a biasing force or load to the piston 220 in a direction toward the second end cap 214, as indicated by arrow 280, thereby positioning the piston 220 proximal the second end cap 214 of the accumulator 110.

As illustrated in Figures 2A, 2B, and 2C, the biasing member 240 may be or include a spring 242. A spring constant of the spring 242 may be varied such that the overall biasing force 280 may be optimized. For example, the spring constant of the spring 242 may be varied to increase or decrease the biasing force 280 applied to the piston 220. In another example, the biasing member 240 may include two or more springs to increase the biasing force 280 applied to the piston 220. While the biasing member 240 illustrated in Figures 2A, 2B, and 2C utilizes the spring 242 to apply the biasing force 280 to the piston 220, it may be appreciated that the biasing force 280 may be provided by other means. For example, the biasing force 280 may be provided by a compressible gas contained in the biasing member 240 and the overall biasing force 280 may be optimized by varying a pressure of the compressible gas contained in the biasing member 240. For example, the pressure of the compressible gas in the biasing member 240 may be varied to increase or decrease the biasing force 280 applied to the piston 220. Illustrative compressible gases may include, but are not limited to, nitrogen, helium, air, or the like.

As illustrated in Figures 2A, 2B, and 2C, with continued reference to Figure 1, the first end cap 212 may define a fuel inlet 262 configured to provide fluid communication between the fuel collector 106 and the first chamber 260 of the accumulator 110 via line 112 and the fuel inlet valve 132. The first end cap 212 may also define a fuel outlet 264 configured to provide fluid communication between the first chamber 260 and the fuel tank of the internal combustion engine via line 113 and the fuel outlet valve 134. The second end cap 214 may define a fluid inlet 266 configured to provide fluid communication between the pump 120 and the second chamber 270 of the accumulator 110 via line 116 and the fluid inlet valve 136. The second end cap 214 may also define a fluid outlet 268 configured to provide fluid communication between the second chamber 270 and line 113 via line 123 and the fluid outlet valve 138.

In at least one embodiment, the accumulator 110 may include an annular member 252 coupled with the first end cap 212 thereof. In another embodiment, the annular member 252 may be integrally formed with the cylindrical body 210 of the accumulator 110. The annular member 252 may be at least partially disposed radially outward of the biasing member 240 and may define a radial clearance or gap 254 through which at least a portion of the piston rod 230 may be slidably disposed. The annular member 252 may define an inlet channel 256 configured to provide fluid communication between the fuel inlet valve 132 and the first chamber 260 via the fuel inlet 262. The annular member 252 may also define an outlet channel 258 configured to provide fluid communication between the first chamber 260 and the fuel outlet valve 134 via the fuel outlet 264.

The fuel ventilation system 100 described herein may provide one or more methods for automatically separating and extracting fuel from lubricating oil in the internal combustion engine, collecting the separated fuel, and automatically returning or cycling the separated fuel back to the internal combustion engine. It may be appreciated that the operating parameters indicated or otherwise defined or described herein are only exemplary and are not in any way to be considered as limiting the scope of the disclosure.

In operation, as illustrated in Figure 1, blow-by fuel may be directed from the internal combustion engine to the vent 104 of the fuel ventilation system 100 via line 102. In at least one embodiment, the blow-by fuel may contain fuel vapors and/or atomized oil. The vent 104 may receive the blow-by fuel, separate at least a portion of the atomized oil from the fuel vapors, and direct the fuel vapors to the fuel collector 106 via line 108. At least a portion of the fuel vapors may cool and condense in the fuel collector 106 to provide the liquid fuel, which may be collected or stored therein. The liquid fuel in the fuel collector 106 may then be directed to the first chamber 260 of the accumulator 110 via line 112.

As illustrated in Figure 2A, with continued reference to Figure 1, the fluid inlet valve 136 may be actuated to prevent the pressurized process fluid from the pump 120 from flowing therethrough and the fuel inlet valve 132 may be actuated to allow the liquid fuel from the fuel collector 106 to flow therethrough. As further illustrated in Figure 2A, the piston 220 may be in a seated position where the second surface 228 of the piston 220 may be located proximal the second end cap 214, thereby maximizing the volume of the first chamber 260 and allowing the liquid fuel in the fuel collector 106 to flow thereto via line 112 and the fuel inlet valve 132.

As illustrated in Figure 2B, with continued reference to Figure 1, after the liquid fuel from the fuel collector 106 is flowed to the first chamber 260, the fuel inlet valve 132 may be actuated to prevent the liquid fuel from the fuel collector 106 from flowing therethrough. Additionally, the fluid inlet valve 136 may be actuated to allow the pressurized process fluid to flow from the pump 120 to the second chamber 270 via line 116 and the fluid inlet 266. As the pressurized process fluid from the pump 120 flows to the second chamber 270, a pressure of the pressurized process fluid contained therein may increase to apply or exert a force to the piston 220 in a direction toward the first end cap 212, as indicated by arrow 290. The force 290 applied by the increased pressure of the second chamber 270 may be greater than the biasing force 280 applied by the biasing member 240, thereby actuating or urging the piston 220 toward the first end cap 212. The actuation of the piston 220 toward the first end cap 212 of the accumulator 110 may reduce the volume of the first chamber 260, thereby discharging or directing the liquid fuel contained therein from the first chamber 260 to the fuel tank of the internal combustion engine via the fuel outlet valve 134 and line 113. In at least one embodiment, the fuel outlet valve 134 may be a check valve or a one-way valve.

As illustrated in Figure 2C, with continued reference to Figure 1, after the liquid fuel in the first chamber 260 is discharged to the internal combustion engine, the fluid inlet valve 136 may be actuated to prevent the pressurized process fluid from the pump 120 from flowing therethrough. Additionally, the fluid outlet valve 138 may be actuated to allow the process fluid to flow from the second chamber 270 to line 113 via the fluid outlet 268 and line 123. Allowing the process fluid to flow from the second chamber 270 to line 113 may decrease the pressure of the process fluid contained in the second chamber 270 such that the force 290 exerted by the process fluid may be less than the biasing force 280 exerted by the biasing member 240, thereby actuating the piston 220 toward the second end cap 214 of the accumulator 110 and returning the piston 220 to the seated position, as illustrated in Figure 2A.

In at least one embodiment, one or more processes of the accumulator 110 and/or the fuel ventilation system 100 may be automated. For example, the fuel ventilation system 100 may include a control system (not shown) operatively coupled therewith and configured to monitor and control one or more operating parameters thereof. Illustrative operating parameters may include, but are not limited to, temperatures, pressures, flowrates, fuel levels, position and/or actuation of the valves, and the like. The control system may include a programmable logic controller (PLC) with inputs from the fuel ventilation system 100 and components thereof and outputs for controlling the operating parameters. The control system may be integral with the fuel ventilation system 100 or the control system may be remote. The control system may also be programmable to control or change any of the various operating parameters of the fuel ventilation system 100.

In at least one embodiment, the control system may be communicably and operatively coupled with any of the valves 132, 134, 136, 138 of the accumulator 110 and/or other components of the fuel ventilation assembly 100, such as the regulator valve 119. For example, any one or more of the valves 119, 132, 134, 136, 138 may be an electrovalve communicably and operatively coupled with the control system. Accordingly, the control system may be capable of actuating any one of the valves 119, 132, 134, 136, 138 to automate one or more processes of the accumulator 110. The control system may be communicably and operatively coupled with the valves 119, 132, 134, 136, 138 and/or other components of the fuel ventilation system 100 through any suitable means including, but not limited to, wired connections and/or wireless connections.

Figure 3 is a flowchart of a method 300 for operating a fuel ventilation system of an internal combustion engine, according to one or more embodiments. The method 300 may include receiving a blow-by fuel from the internal combustion engine at a vent fluidly coupled therewith and separating fuel vapor from the blow-by fuel in the vent, as shown at 302. The method 300 may also include condensing the fuel vapor to a liquid fuel in a fuel collector fluidly coupled with the vent, as shown at 304. The method 300 may further include directing the liquid fuel from the fuel collector to an accumulator, as shown at 306. The method 300 may also include discharging the liquid fuel from the accumulator to the internal combustion engine, as shown at 308.

Figure 4 is a flowchart of another method 400 for operating a fuel ventilation system of an internal combustion engine, according to one or more embodiments. The method 400 may include receiving a blow-by fuel from the internal combustion engine at a vent fluidly coupled therewith and separating fuel vapor from the blow-by fuel in the vent, as shown at 402. The method 400 may also include condensing the fuel vapor to a liquid fuel in a fuel collector fluidly coupled with the vent, as shown at 404. The method 400 may further include actuating a fuel inlet valve to direct the liquid fuel from the fuel collector to a first chamber of an accumulator, as shown at 406. The accumulator may include a hollow body having a first end and a second end. The accumulator may also include a piston slidably disposed in the hollow body between the first end and the second end. A first surface of the piston and the first end may at least partially define the first chamber therebetween, and a second surface of the piston and the second end may at least partially define a second chamber therebetween. The accumulator may further include a biasing member disposed in the first chamber. The biasing member may be configured to apply a biasing force to the first surface of the piston to thereby actuate the piston toward the second end of the hollow body. The method 400 may also include actuating a fluid inlet valve to direct fuel from a fuel pump of the internal combustion engine to the second chamber of the accumulator to pressurize the second chamber, as shown at 408. The method 400 may also include discharging the liquid fuel from the first chamber of the accumulator to the internal combustion engine, as shown at 410.

The foregoing has outlined features of several embodiments so that those skilled in the art may better understand the present disclosure. Those skilled in the art should appreciate that they may readily use the present disclosure as a basis for designing or modifying other processes and structures for carrying out the same purposes and/or achieving the same advantages of the embodiments introduced herein.

## Claims

1. A fuel ventilation system for an internal combustion engine, **characterized in that** it comprises:
- a vent (104) fluidly coupled with the internal combustion engine and configured to receive a blow-by fuel therefrom **characterised in that** the vent (104) is configured to separate fuel vapor from the blow-by fuel and the fuel ventilation system further comprises:
- a fuel collector (106) fluidly coupled with the vent (104) and configured to receive the fuel vapor therefrom and condense the fuel vapor to a liquid fuel;
- an accumulator (110) comprising:
- a hollow body having a first end and a second end;
- a piston (220) slidably disposed in the hollow body between the first end and the second end, the piston (220) and the first end at least partially defining a first chamber (260) therebetween, and the piston (220) and the second end at least partially defining a second chamber (270) therebetween; and
- a biasing member (240) interposed between the piston (220) and the first end and configured to apply a biasing force to the piston (220) and actuate the piston (220) toward the second end; and
- a pump (120) fluidly coupled with the second chamber (270) of the accumulator (110) and configured to direct a process fluid thereto, thereby pressurizing the second chamber (270) and applying a force to the piston (220) to actuate the piston (220) toward the first end.

2. The fuel ventilation system of claim 1, **characterized in that** it further comprises:
- a fuel inlet valve (132) fluidly coupled with the fuel collector (106) and the first chamber (260) of the accumulator (110) and configured to control a flow of the liquid fuel from the fuel collector (106) to the first chamber(260); and
- a fluid inlet valve (136) fluidly coupled with the pump (120) and the second chamber (270) of the accumulator (110) and configured to control a flow of the process fluid from the pump (120) to the second chamber (270).

3. The fuel ventilation system of claim 1, **characterized in that** it further comprises a fuel outlet valve fluidly coupled with the first chamber (260) of the accumulator (110) and the internal combustion engine and configured to control a flow of the liquid fuel from the first chamber (260) to the internal combustion engine.

4. The fuel ventilation system of claim 1, **characterized in that** it further comprises a fluid outlet valve (134) fluidly coupled with the second chamber (270) of the accumulator (110) and the internal combustion engine and configured to control a flow of the process fluid from the second chamber (270) to the internal combustion engine.

5. The fuel ventilation system of claim 1, **characterized in that** the pump (120) is a fuel pump (120) of the internal combustion engine and the process fluid is fuel from the internal combustion engine.

6. The fuel ventilation system of claim 1, **characterized in that** the biasing member (240) comprises a compressible gas configured to provide the biasing force to the piston (220).

7. A method for operating a fuel ventilation system of an internal combustion engine, comprising:
- feeding a blow-by fuel from the internal combustion engine to a vent (104) fluidly coupled therewith; **characterised in that** the method further comprises:
- separating fuel vapor from the blow-by fuel in the vent (104);
- condensing the fuel vapor to a liquid fuel in a fuel collector (106) fluidly coupled with the vent;
- directing the liquid fuel from the fuel collector (106) to an accumulator (110);
- and discharging the liquid fuel from the accumulator (110) to the internal combustion engine.

8. The method of claim 7, **characterized in that** the accumulator (110) comprises:
- a hollow body having a first end and a second end;
- a piston (220) slidably disposed in the hollow body between the first end and the second end, a first surface of the piston (220) and the first end at least partially defining a first chamber (260) therebetween, a second surface of the piston (220) and the second end at least partially defining a second chamber (270) therebetween; and
- a biasing member (240) disposed in the first chamber (260) and configured to apply a biasing force to the first surface of the piston (220) and thereby actuate the piston (220) toward the second end of the hollow body.

9. The method of claim 8, **characterized in that** it further comprises actuating a fuel inlet valve (132) to direct the liquid fuel from the fuel collector (106) to the first chamber (260) of the accumulator (110).

10. The method of claim 9, **characterized in that** it further comprises actuating a fluid inlet valve (136) to deliver a process fluid from a pump (120) to the second chamber (270) of the accumulator (110).

11. The method of claim 10, **characterized in that** it further comprises applying a force to the second surface of the piston (220) greater than the biasing force applied to the first surface of the piston (220) by pressuring the second chamber (270) with the process fluid from the pump (120), thereby actuating the piston (220) toward the first end.

12. The method of claim 11, **characterized in that** it further comprises discharging the liquid fuel from the first chamber (260) to the internal combustion engine.

13. The method of claim 12, **characterized in that** it further comprises actuating a fluid outlet valve (134) to discharge the process fluid from the second chamber (270) of the accumulator (110) and depressurize the second chamber (270).

14. The method of claim 13, **characterized in that** the second chamber is depressurized such that the force applied to the second surface is less than the biasing force applied to the first surface, thereby actuating the piston (220) toward the second end.

## Patentansprüche

1. Kraftstoffentlüftungssystem für einen Verbrennungsmotor, **dadurch gekennzeichnet, dass** es Folgendes umfasst:
- eine Entlüftungsvorrichtung (104), die in Flüssigkeitsverbindung mit dem Verbrennungsmotor gekoppelt und dazu ausgelegt ist, Blowby-Kraftstoff aus demselben aufzunehmen, **dadurch gekennzeichnet, dass** die Entlüftungsvorrichtung (104) dazu ausgelegt ist, Kraftstoffdampf aus dem Blowby-Kraftstoff abzuscheiden, und das Kraftstoffentlüftungssystem ferner Folgendes umfasst:
- eine Kraftstoffsammeivorrichtung (106), die in Flüssigkeitsverbindung mit der Entlüftungsvorrichtung (104) gekoppelt und dazu ausgelegt ist, den Kraftstoffdampf aus derselben aufzunehmen und den Kraftstoffdampf in einen flüssigen Kraftstoff zu kondensieren,
- einen Speicher (110), umfassend:
- einen Hohlkörper, der ein erstes Ende und ein zweites Ende aufweist,
- einen Kolben (220), der verschiebbar in dem Hohlkörper zwischen dem ersten Ende und dem zweiten Ende angeordnet ist, wobei der Kolben (220) und das erste Ende wenigstens zum Teil eine erste Kammer (260) zwischen denselben festlegen, und wobei der Kolben (220) und das zweite Ende wenigstens zum Teil eine zweite Kammer (270) zwischen denselben festlegen, und
- ein Vorspannelement (240), das zwischen dem Kolben (220) und dem ersten Ende angeordnet und dazu ausgelegt ist, eine Vorspannkraft auf den Kolben (220) auszuüben und den Kolben (220) zu dem zweiten Ende in Bewegung zu setzen, und
- eine Pumpe (120), die in Flüssigkeitsverbindung mit der zweiten Kammer (270) des Speichers (110) gekoppelt und dazu ausgelegt ist, eine Prozessflüssigkeit zu derselben zu leiten, und dadurch die zweite Kammer (270) mit Druck beaufschlagt und eine Kraft auf den Kolben (220) ausübt, um den Kolben (220) zu dem ersten Ende in Bewegung zu setzen.

2. Kraftstoffentlüftungssystem nach Anspruch 1, **dadurch gekennzeichnet, dass** es ferner Folgendes umfasst:
- ein Kraftstoffeinlassventil (132), das in Flüssigkeitsverbindung mit der Kraftstoffsammelvorrichtung (106) und der ersten Kammer (260) des Speichers (110) gekoppelt und dazu ausgelegt ist, einen Strom des flüssigen Kraftstoffs von der Kraftstoffsammelvorrichtung (106) zu der ersten Kammer (260) zu steuern, und
- ein Flüssigkeitseinlassventil (136), das in Flüssigkeitsverbindung mit der Pumpe (120) und der zweiten Kammer (270) des Speichers (110) gekoppelt und dazu ausgelegt ist, einen Strom der Prozessflüssigkeit von der Pumpe (120) zu der zweiten Kammer (270) zu steuern.

3. Kraftstoffentlüftungssystem nach Anspruch 1, **dadurch gekennzeichnet, dass** es ferner ein Kraftstoffauslassventil umfasst, das in Flüssigkeitsverbindung mit der ersten Kammer (260) des Speichers (110) und dem Verbrennungsmotor gekoppelt und dazu ausgelegt ist, einen Strom des flüssigen Kraftstoffs von der ersten Kammer (260) zu dem Verbrennungsmotor zu steuern.

4. Kraftstoffentlüftungssystem nach Anspruch 1, **dadurch gekennzeichnet, dass** es ferner ein Flüssigkeitsauslassventil (134) umfasst, das in Flüssigkeitsverbindung mit der zweiten Kammer (270) des Speichers (110) und dem Verbrennungsmotor gekoppelt und dazu ausgelegt ist, einen Strom der Prozessflüssigkeit von der zweiten Kammer (270) zu dem Verbrennungsmotor zu steuern.

5. Kraftstoffentlüftungssystem nach Anspruch 1, **dadurch gekennzeichnet, dass** die Pumpe (120) eine Kraftstoffpumpe (120) des Verbrennungsmotors ist und die Prozessflüssigkeit Kraftstoff aus dem Verbrennungsmotor ist.

6. Kraftstoffentlüftungssystem nach Anspruch 1, wobei das Vorspannelement (240) ein komprimierbares Gas umfasst, das dazu ausgelegt ist, dem Kolben (220) die Vorspannkraft zuzuführen.

7. Verfahren zum Betrieb eines Kraftstoffentlüftungssystems eines Verbrennungsmotors, umfassend:
- Zuführen eines Blowby-Kraftstoffs aus dem Verbrennungsmotor zu einer Entlüftungsvorrichtung (104), die in Flüssigkeitsverbindung mit demselben gekoppelt ist,
**dadurch gekennzeichnet, dass** das Verfahren ferner Folgendes umfasst:
- Abscheiden von Kraftstoffdampf aus dem Blowby-Kraftstoff in der Entlüftungsvorrichtung (104),
- Kondensieren des Kraftstoffdampfs in einen flüssigen Kraftstoff in einer Kraftstoffsammelvorrichtung (106), die in Flüssigkeitsverbindung mit der Entlüftungsvorrichtung gekoppelt ist,
- Leiten des flüssigen Kraftstoffs von der Kraftstoffsammelvorrichtung (106) zu einem Speicher (110)
- und Abführen des flüssigen Kraftstoffs von dem Speicher (110) zu dem Verbrennungsmotor.

8. Verfahren nach Anspruch 7, **dadurch gekennzeichnet, dass** der Speicher (110) Folgendes umfasst:
- einen Hohlkörper, der ein erstes Ende und ein zweites Ende aufweist,
- einen Kolben (220), der verschiebbar in dem Hohlkörper zwischen dem ersten Ende und dem zweiten Ende angeordnet ist, wobei eine erste Oberfläche des Kolbens (220) und das erste Ende wenigstens zum Teil eine erste Kammer (260) zwischen denselben festlegen und eine zweite Oberfläche des Kolbens (220) und das zweite Ende wenigstens zum Teil eine zweite Kammer (270) zwischen denselben festlegen, und
- ein Vorspannelement (240), das in der ersten Kammer (260) angeordnet und dazu ausgelegt ist, eine Vorspannkraft auf die erste Oberfläche des Kolbens (220) auszuüben und dadurch den Kolben (220) zu dem zweiten Ende des Hohlkörpers in Bewegung zu setzen.

9. Verfahren nach Anspruch 8, **dadurch gekennzeichnet, dass** es ferner das Betätigen eines Kraftstoffeinlassventils (132) umfasst, um den flüssigen Kraftstoff von der Kraftstoffsammelvorrichtung (106) zu der ersten Kammer (260) des Speichers (110) zu leiten.

10. Verfahren nach Anspruch 9, **dadurch gekennzeichnet, dass** es ferner das Betätigen eines Flüssigkeitseinlassventils (136) umfasst, um eine Prozessflüssigkeit von einer Pumpe (120) zu der zweiten Kammer (270) des Speichers (110) zu fördern.

11. Verfahren nach Anspruch 10, **dadurch gekennzeichnet, dass** es ferner das Ausüben einer Kraft auf die zweite Oberfläche des Kolbens (220) umfasst, die größer als die auf die erste Oberfläche des Kolbens (220) ausgeübte Vorspannkraft ist, indem die zweite Kammer (270) mit der Prozessflüssigkeit von der Pumpe (120) mit Druck beaufschlagt wird, wodurch der Kolben (220) zu dem ersten Ende in Bewegung gesetzt wird.

12. Verfahren nach Anspruch 11, **dadurch gekennzeichnet, dass** es ferner das Abführen des flüssigen Kraftstoffs aus der ersten Kammer (260) zu dem Verbrennungsmotor umfasst.

13. Verfahren nach Anspruch 12, **dadurch gekennzeichnet, dass** es ferner das Betätigen eines Flüssigkeitsauslassventils (134) umfasst, um die Prozessflüssigkeit aus der zweiten Kammer (270) des Speichers (110) abzuführen und den Druck in der zweiten Kammer (270) herabzusetzen.

14. Verfahren nach Anspruch 13, **dadurch gekennzeichnet, dass** der Druck in der zweiten Kammer auf eine solche Weise herabgesetzt wird, dass die auf die zweite Oberfläche ausgeübte Kraft geringer als die auf die erste Oberfläche ausgeübte Vorspannkraft ist, wodurch der Kolben (220) zu dem zweiten Ende in Bewegung gesetzt wird.

## Revendications

1. Système de ventilation de carburant pour un moteur à combustion interne, **caractérisé en ce qu'**il comprend :
un évent (104) accouplé de manière fluidique au moteur à combustion interne et conçu pour en recevoir un carburant de fuite, **caractérisé en ce que** l'évent (104) est conçu pour séparer la vapeur de carburant du carburant de fuite et le système de ventilation de carburant comprend en outre :
un collecteur de carburant (106) accouplé de manière fluidique à l'évent (104) et conçu pour en recevoir la vapeur de carburant et condenser la vapeur de carburant en un carburant liquide ;
un accumulateur (110) comprenant :
un corps creux ayant une première extrémité et une seconde extrémité ;
un piston (220) disposé de manière coulissante dans le corps creux entre la première extrémité et la seconde extrémité, le piston (220) et la première extrémité définissant au moins partiellement une première chambre (260) entre eux, et le piston (220) et la seconde extrémité définissant au moins partiellement une seconde chambre (270) entre eux ; et
un élément de sollicitation (240) interposé entre le piston (220) et la première extrémité et conçu pour appliquer une force de sollicitation au piston (220) et actionner le piston (220) vers la seconde extrémité ; et
une pompe (120) accouplée de manière fluidique à la seconde chambre (270) de l'accumulateur (110) et conçue pour y diriger un fluide de traitement, mettant ainsi sous pression la seconde chambre (270) et appliquant une force au piston (220) pour actionner le piston (220) vers la première extrémité.

2. Système de ventilation de carburant selon la revendication 1, **caractérisé en ce qu'**il comprend en outre :
une soupape d'entrée de carburant (132) accouplée de manière fluidique au collecteur de carburant (106) et à la première chambre (260) de l'accumulateur (110) et conçue pour commander un flux du carburant liquide du collecteur de carburant (106) vers la première chambre (260) ; et
une soupape d'entrée de fluide (136) accouplée de manière fluidique à la pompe (120) et à la seconde chambre (270) de l'accumulateur (110) et conçue pour commander un flux du fluide de traitement de la pompe (120) vers la seconde chambre (270) .

3. Système de ventilation de carburant selon la revendication 1, **caractérisé en ce qu'**il comprend en outre une soupape de sortie de carburant accouplée de manière fluidique à la première chambre (260) de l'accumulateur (110) et au moteur à combustion interne et conçue pour commander un flux de carburant liquide de la première chambre (260) vers le moteur à combustion interne.

4. Système de ventilation de carburant selon la revendication 1, **caractérisé en ce qu'**il comprend en outre une soupape de sortie de fluide (134) accouplée de manière fluidique à la seconde chambre (270) de l'accumulateur (110) et au moteur à combustion interne et conçue pour commander un flux du fluide de traitement de la seconde chambre (270) vers le moteur à combustion interne.

5. Système de ventilation de carburant selon la revendication 1, **caractérisé en ce que** la pompe (120) est une pompe à carburant (120) du moteur à combustion interne et le fluide de traitement est du carburant provenant du moteur à combustion interne.

6. Système de ventilation de carburant selon la revendication 1, **caractérisé en ce que** l'élément de sollicitation (240) comprend un gaz compressible conçu pour fournir la force de sollicitation au piston (220).

7. Procédé pour faire fonctionner un système de ventilation de carburant d'un moteur à combustion interne, comprenant l'étape consistant à :
fournir un carburant de fuite du moteur à combustion interne à un évent (104) accouplé de manière fluidique à celui-ci ;
**caractérisé en ce que** le procédé comprend en outre les étapes consistant à :
séparer la vapeur de carburant du carburant de fuite dans l'évent (104) ;
condenser la vapeur de carburant en un carburant liquide dans un collecteur de carburant (106) accouplé de manière fluidique à l'évent ;
diriger le carburant liquide du collecteur de carburant (106) vers un accumulateur (110) ;
et décharger le carburant liquide de l'accumulateur (110) vers le moteur à combustion interne.

8. Procédé selon la revendication 7, **caractérisé en ce que** l'accumulateur (110) comprend :
un corps creux ayant une première extrémité et une seconde extrémité ;
un piston (220) disposé de manière coulissante dans le corps creux entre la première extrémité et la seconde extrémité, une première surface du piston (220) et la première extrémité définissant au moins partiellement une première chambre (260) entre eux, une seconde surface du piston (220) et la seconde extrémité définissant au moins partiellement une seconde chambre (270) entre eux ; et
un élément de sollicitation (240) disposé dans la première chambre (260) et conçu pour appliquer une force de sollicitation à la première surface du piston (220) et ainsi actionner le piston (220) vers la seconde extrémité du corps creux.

9. Procédé selon la revendication 8, **caractérisé en ce qu'**il comprend en outre l'étape consistant à actionner une soupape d'entrée de carburant (132) pour diriger le carburant liquide du collecteur de carburant (106) vers la première chambre (260) de l'accumulateur (110).

10. Procédé selon la revendication 9, **caractérisé en ce qu'**il comprend en outre l'étape consistant à actionner une soupape d'entrée de fluide (136) pour amener un fluide de traitement d'une pompe (120) à la seconde chambre (270) de l'accumulateur (110).

11. Procédé selon la revendication 10, **caractérisé en ce qu'**il comprend en outre l'étape consistant à appliquer une force à la seconde surface du piston (220) supérieure à la force de sollicitation appliquée à la première surface du piston (220) en mettant sous pression la seconde chambre (270) avec le fluide de traitement provenant de la pompe (120), actionnant ainsi le piston (220) vers la première extrémité.

12. Procédé selon la revendication 11, **caractérisé en ce qu'**il comprend en outre l'étape consistant à décharger le carburant liquide de la première chambre (260) vers le moteur à combustion interne.

13. Procédé selon la revendication 12, **caractérisé en ce qu'**il comprend en outre l'étape consistant à actionner une soupape de sortie de fluide (134) pour décharger le fluide de traitement de la seconde chambre (270) de l'accumulateur (110) et dépressuriser la seconde chambre (270) .

14. Procédé selon la revendication 13, **caractérisé en ce que** la seconde chambre est dépressurisée de sorte que la force appliquée à la seconde surface soit inférieure à la force de sollicitation appliquée à la première surface, actionnant ainsi le piston (220) vers la seconde extrémité.
